Europäisches Patentamt

(19) European Patent Office

Office européen des brevets

(11) Publication number: **0 205 196**
**B1**

(12) **EUROPEAN PATENT SPECIFICATION**

(45) Date of publication of the patent specification:
26.09.90

(51) Int. Cl.⁵: **G01N 25/66**, G01N 21/47,
G01N 25/68

(21) Application number: 86200685.5

(22) Date of filing: 22.04.86

(54) An apparatus for detecting condensable components in a gas stream.

(30) Priority: **10.06.85 GB 8514584**

(43) Date of publication of application:
**17.12.86 Bulletin 86/51**

(45) Publication of the grant of the patent:
**26.09.90 Bulletin 90/39**

(84) Designated Contracting States:
**DE FR GB NL**

(56) References cited:
**EP-A- 0 037 440**
**DE-A- 2 104 499**
**DE-A- 3 243 320**
**US-A- 3 623 356**
**US-A- 4 328 455**

**ADVANCES IN INSTRUMENTATION, vol. 37, part 3, 1982,
pages 1617-1629, Research Triangle Park, N.C., US; J.C.
HARDING "Precision humidity measurement"**

(73) Proprietor: SHELL INTERNATIONALE RESEARCH
MAATSCHAPPIJ B.V., Carel van Bylandtlaan 30,
NL-2596 HR Den Haag(NL)

(72) Inventor: Bannell, John Leslie Kingsford, c/o P.O. Box 1,
Chester Cheshire(GB)
Inventor: Dixon, Arnold Graham, c/o P.O. Box 1, Chester
Cheshire(GB)
Inventor: Davies, Trevor Picton, c/o P.O. Box 1, Chester
Cheshire(GB)

(74) Representative: Aalbers, Onno et al, P.O. Box 302,
NL-2501 CH The Hague(NL)

## Description

The invention relates to an apparatus for detecting condensable components in a gas stream or changes in the condensation properties of a gas.

A variety of devices based upon the principle of detecting the presence of condensate such as, for example, dew on a cooled surface, for example a mirror, by means of light reflection techniques, are currently available for the determination of the water dew-point of gas streams, particularly humid air streams. However, it appeared that their performance is not always reliable and accurate. Humid air is essentially a two-component mixture consisting of a single condensable component in, for all practical purposes, an incondensable carrier. Dew-point is therefore easily defined. However, many gas streams such as those found in the on-shore and off-shore gas industry, in gas processing and industrial plant, are often complex mixtures for which a condensation property such as, for example, the dew-point is less readily defined. Such a mixture can be regarded as a series of condensable fractions and dew-point is defined at that temperature, at fixed pressure (or vice versa), when measurable dew can be detected. Further decrease in temperature will increase the amount of dew formed as heavier fractions condense. It has been found that quantities of heavier fractions present in small, but still analytically significant, quantities have a profound influence on the dew-point of such a mixture. No reliable automatic dew-point meter or monitor that can respond sensitively and accurately to the formation of the first significant condensation of such heavier components, which define the dew-point, is available.

In order to obtain an accurate indication of a condensation property, such as, for example, the dew-point it is necessary to meet pre-determined requirements as to temperature and pressure and it will be necessary to present a gas sample to be investigated under controlled conditions to the detector.

The most successful of current devices for complex mixtures of gases are those based on the visual observation of condensate such as, for example, dew on a cooled plane-mirror surface. Their sensitivity is poor, however, and the observation and interpretation of visual dew formation is subjective and susceptible to operator bias or mis-reading.

Initial work using this principle, but with electronic detection of the change in light reflectance, showed that the signal obtained was noisy, transient and unreliable. Condensed water is relatively easy to detect as it condenses in a drop-wise manner, but complex mixtures of gases condense with much lower contact angles quickly form a film on the surface thus restoring reflection.

Thus, it is an object of the invention to provide an apparatus for detecting, condensable components in gas streams which gives reliable and reproducible results.

The present invention therefore provides an apparatus for detecting condensable components in a gas stream, comprising a sensor cell with a probe, means for transmitting light to the probe surface in a pressurized chamber the probe surface being arranged to scatter the impinging light, means for receiving returned light scattered from the cooled probe surface and said apparatus further comprising means for determining the presence of condensate from a reduction in scattered light intensity, wherein the probe surface in its centre is provided with a depression of low angle. In an advantageous embodiment of the invention the depression is circular. In another advantageous embodiment the circular depression has a V-shape in cross-section.

The invention is based upon detecting formation of condensate from the gas stream on a cooled probe surface by the reduction in scattered light intensity from the surface when condensate is present.

It can be remarked that DE-A 3 243 320 discloses change of reflectance of a concave mirror to sense dew, that is, an apparatus for detecting condensable components in a gas comprising a sensor cell with a probe, means for cooling the probe, means for transmitting light to the probe surface in a chamber, means for receiving returned light from the cooled probe surface and said apparatus further comprising means for determining the presence of condensate from a reduction in returned light intensity, wherein the probe surface in its centre is provided with a depression of low angle. Further, US-A 3 623 356 discloses a dew point hygrometer wherein a change of scattered light is disclosed. However, the feature of employing the secondary effect of a reduction of scattered light using a probe surface with a depression of low angle to detect dew, is not disclosed in these citations.

The invention will now be described by way of example in more detail with reference to the accompanying drawings in which:

apparatus for detecting condensable components in a gas comprising a sensor cell with a probe means for cooling the probe, means for transmitting light to the probe surface in a chamber, means for receiving returned light from the cooled probe surface and said apparatus further comprising means for determining the presence of condensate from a reduction in returned light intensity, wherein the probe surface in its centre is provided with a depression of low angle.

fig. 1 represents a flow scheme of an apparatus for detecting condensable components in a gas stream, based upon determining the presence of condensate by the reduction in scattered light intensity from the probe surface when condensate is present;

fig. 2 illustrates the light scattering principle involved; and

fig. 3 represents a detail of fig. 1 and 2.

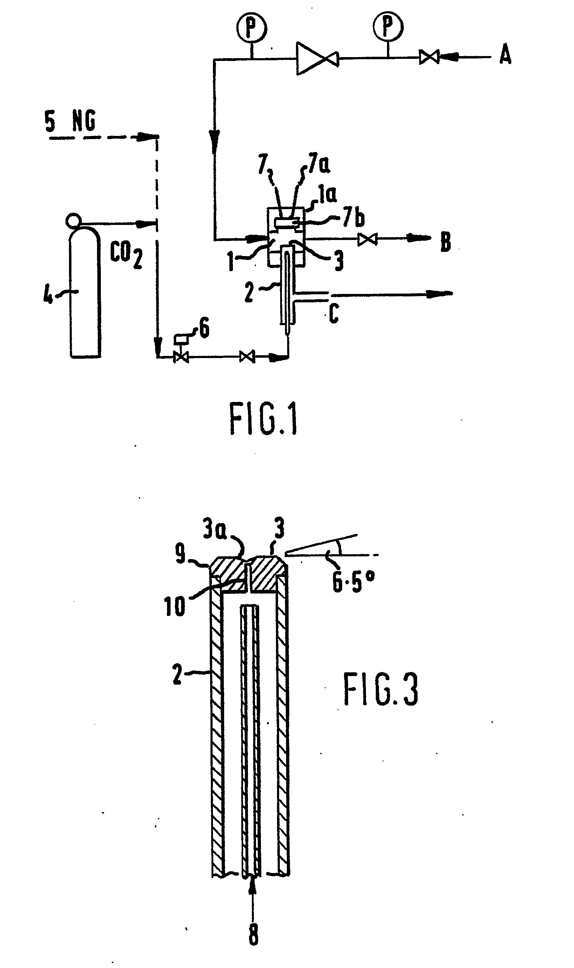

By reference now to fig. 1 a gas sample is taken from a flow line (not shown for reasons of clarity) at point A and flows continuously through the pressurized chamber 1 of a sensor cell 1a at a controlled pressure and flow rate.

The sensor cell 1 is provided with a probe 2.

Coolant gas (for example $CO_2$ from a storage vessel 4, but other suitable gases such as natural gas 5 shown in dashed lines could be considered) is expanded at a controlled rate to cool the probe surface 3, which is lightly abraded. The coolant gas is switched on/off cyclically with an air-actuated valve 6. It will be appreciated that the flows of sample gas and coolant gas are not critical. After passing the sensor cell the gas sample is processed further at B in any way suitable for the purpose. The used coolant flows through the outlet C of the probe assembly 2 and is processed further in any suitable manner.

In an alternative embodiment the sample gas flow may be interrupted in any way suitable for the purpose to trap a volume of gas in the sensor chamber.

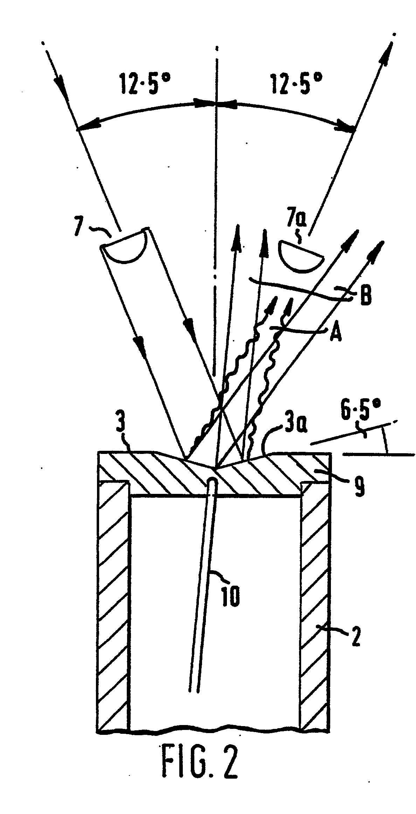

Fig. 2 represents diagrammatically part of a longitudinal section through the probe 2 and sample chamber of the sensor cell. The light collecting and transmitting elements 7 and 7a are arranged to have near coincident focus through window 7b (not shown for clarity in figure 2, but shown in fig. 3) on the probe surface 3. However, the probe surface 3 is arranged to deflect light from a direct path between the transmitting and collecting elements 7 and 7a. In the main only light scattered by the probe surface 3 to the element 7a will be collected (represented as light beam A) whereas directly reflected light beams are steered away from the receiver (beams B). The probe surface 3 may be in the form of a circular conical depression 3a or extension in form, however its angle and form are not critical provided the main deflection requirements are met. After machining and polishing, the conical depression 3a in the probe surface 3 is slightly roughened by mechanical, chemical of other means to enhance the scattering of light from the surface.

In an advantageous embodiment of this principle, as in fig. 2 and 3, the transmitting and collecting elements 7 and 7a are arranged at a half-angle of 10-15° and more in particular 12.5° from the centre line in combination with a 'V'-shaped circular depression of low angle. In advantageous embodiments this angle is 4-8° and more in particular 6.5°. The nominal diameter of the depression at the surface is 6 mm which is equivalent to a nominal depth, at the centre, of 0.34 mm. The relative geometry of probe surface, fibre optic transmitting and receiving elements and the optical and mechanical properties of the viewing window provide a compact arrangement of components fit for the purposes of the invention. The coolant supply to the surface 3 is represented by reference numeral 8 in fig. 3.

Received signal processing occurs remotely from the sensor cell and is not shown for reasons of clarity.

Usually the means 7 and 7a consist of suitable fibre optics.

As already described in the foregoing the scattering of returning light from the probe surface 3a will change when condensate (for example dew) is present due to cooling this surface and the reduction in scattered light intensity that occurs when condensate (dew) is present, is detected to determine a condensation property such, as for example, the dew-point.

For example, in one of the practical embodiments of the invention, employing a sensor cell with a safe working pressure of 200 bar, the nominal sample flow is < 0.02 m³ (st)/h with cooling by $CO_2$ at nominal rates of < 0.5 1/°C, 0.2 °C/s and with cycle time > 2 min. It will be appreciated that the safe working pressure of the sensor assembly is determined solely by mechanical considerations and in no sense is a constraint on application of the principle of the invention at higher (or lower) pressures.

The probe 2 and the probe tip 9 may be made of any material suitable for the purpose and may be connected mechanically in any suitable manner.

The probe is provided with any suitable means for mechanical connection to the sensor cell 1 (not shown for reasons of clarity). Reference numeral 10 in figs. 2 and 3 indicates the place for a thermocouple, which continuously measures the temperature of the probe surface so that the temperature at which condensation starts, can be determined. It will be appreciated that any suitable temperature measuring device can be applied. In an advantageous embodiment of the invention the temperature of the surface can be measured at various levels of the signal change.

It will further be appreciated that an advantageous embodiment of the invention can be used for measuring dew-point of hydrocarbon gas streams. Another advantageous embodiment of the invention can be used for dew-point measurement of humid air.

It will further be appreciated that the apparatus according to the invention can be used to perform condensate quantity measurements.

For example, calibration of the apparatus of the invention could be achieved by the use of lean binary gas mixtures, whose saturation curves can be accurately predicted. Such mixtures when cooled below their condensation temperature will remain in equilibrium, maintaining some proportion of their condensable component as vapour within the gas stream. This proportion can be predicted, hence the quantity condensed may be inferred and referenced to the optical signal change observed.

Such calibration can be carried out using a number of different pressure/gas composition conditions and could yield a high accuracy calibration of the system's sensitivity.

Various modifications of the invention will become apparent to those skilled in the art from the foregoing description and accompanying drawings.

Such modifications are intended to fall within the scope of the appended claims.

**Claims**

1. An apparatus for detecting condensable components in a gas stream, comprising a sensor cell (1a) with a probe (2), means (8) for cooling the probe, means (7) for transmitting light to the probe surface in a pressurized chamber (1) the probe surface being arranged to scatter the impinging light, means (7a) for receiving returned light scattered from the cooled probe surface and said apparatus further comprising means for determining the presence of condensate from a reduction in scattered light intensity, wherein the probe surface in its centre is provided with a depression (3a) of low angle.

2. The apparatus as claimed in claim 1, characterized in that the depression is circular.

3. The apparatus as claimed in claim 2, characterized in that the depression has a V-shape in cross-section.

4. The apparatus as claimed in any one of claims 1-3, characterized in that the angle is 4-8°.

5. The apparatus as claimed in claim 4, characterized in that the angle is 6.5°.

6. The apparatus as claimed in claim 3, characterized in that the V-shaped depression has a nominal depth of 0.34 mm and a nominal diameter of 6 mm.

7. The apparatus as claimed in claim 1, characterized in that the half-angle between light transmitting/receiving means is 10-15°.

8. The apparatus as claimed in claim 7, characterized in that the said half-angle is 12.5°.

## Patentansprüche

1. Vorrichtung zum Detektieren von kondensierbaren Bestandteilen in einem Gasstrom umfassend eine Sensorzelle (1a) mit einer Sonde (2), eine Einrichtung (8) zum Kühlen der Sonde, eine Einrichtung (7) zur Übertragung von Licht zur Sonde in einer Druckkammer (1), wobei die Sondenoberfläche derart ausgebildet ist, daß sie das auftreffende Licht streut, eine Einrichtung (7a) zum Empfang des an der gekühlten Sondenoberfläche zurückgelenkten gestreuten Lichts, wobei die Vorrichtung ferner eine Einrichtung zur Bestimmung des Vorhandenseins von Kondensat aus einer Verminderung der Streulichtintensität hat und die Sondenoberfläche in ihrem Zentrum mit einer Vertiefung (3a) geringen Winkels versehen ist.

2. Vorrichtung nach Anspruch 1, dadurch gekennzeichnet, daß die Vertiefung kreisförmig ist.

3. Vorrichtung nach Anspruch 2, dadurch gekennzeichnet, daß die Vertiefung im Querschnitt V-förmig ist.

4. Vorrichtung nach einem der Ansprüche 1 bis 3, dadurch gekennzeichnet, daß der Winkel 4 bis 8° beträgt.

5. Vorrichtung nach Anspruch 4, dadurch gekennzeichnet, daß der Winkel 6,5° beträgt.

6. Vorrichtung nach Anspruch 3, dadurch gekennzeichnet, daß die V-förmige Vertiefung eine Nominaltiefe von 0,34 mm und einen Nominaldurchmesser von 6 mm hat.

7. Vorrichtung nach Anspruch 1, dadurch gekennzeichnet, daß der Halbwinkel zwischen der Lichtübertragungseinrichtung und der Empfangseinrichtung 10 bis 15° beträgt.

8. Vorrichtung nach Anspruch 7, dadurch gekennzeichnet, daß der Halbwinkel 12,5° beträgt.

## Revendications

1. Un appareil pour détecter des composants condensable dans un écoulement de gaz, comprenant une cellule de détection (1a) avec une éprouvette (2), un moyen (8) pour refroidir l'éprouvette, un moyen (7) pour transmettre de la lumière sur la surface d'éprouvette dans une chambre pressurisée (1), la surface d'éprouvette étant agencée pour disperser la lumière incidente, un moyen (7a) pour recevoir de la lumière renvoyée qui est dispersée à partir de la surface d'éprouvette refroidie, et ledit appareil comprenant en outre un moyen pour déterminer la pression d'un condensat à partir d'une réduction de l'intensité de la lumière dispersée, la surface d'éprouvette étant pourvue en son centre d'un creux (3a) de petit angle.

2. L'appareil tel que revendiqué dans la revendication 1, caractérisé en ce que le creux est circulaire.

3. L'appareil tel que revendiqué dans la revendication 2, caractérisé en ce que le creux a une section droite en forme de V.

4. L'appareil tel que revendiqué dans une quelconque des revendications 1 à 3, caractérisé en ce que l'angle est compris entre 4 et 8°.

5. L'appareil tel que revendiqué dans la revendication 4, caractérisé en ce que l'angle est de 6,5°.

6. L'appareil tel que revendiqué dans la revendication 3, caractérisé en ce que le creux en forme de V a une profondeur nominale de 0,34 mm et un diamètre nominal de 6 mm.

7. L'appareil tel que revendiqué dans la revendication 1, caractérisé en ce que le demi-angle entre les moyens de transmission/réception de lumière est compris entre 10 et 15°.

8. L'appareil tel que revendiqué dans la revendication 7, caractérisé en ce que ledit demi-angle est de 12,5°.

FIG.1

FIG.3

FIG. 2